# EUROPEAN PATENT SPECIFICATION

(11) **EP 1 564 944 B1**
(45) Date of publication and mention of the grant of the patent: **20.12.2006**
(21) Application number: 04003263.3
(22) Date of filing: 13.02.2004
(51) Int. Cl.: H04L 12/58, H04Q 7/22, H04L 29/06

(54) **Method and device for message delivery**
Verfahren und Vorrichtung zur Nachrichtenlieferung
Procédé et dispositif pour remise de messages

(43) Date of publication of application: 17.08.2005
(73) Proprietor: Sony Ericsson Mobile Communications AB, 221 88 Lund (SE)
(72) Inventor: Foxenland, Eral, 254 41 Helsingborg (SE)
(74) Representative: Asketorp, Göran

(56) References cited:
- EP-A- 1 139 608
- EP-A- 1 289 220
- WO-A-01/28171
- US-A1- 2002 002 590
- US-A1- 2002 119 789

## Description

### Technical Field of the Invention

The present invention relates to a method and a device for entering and forming an electronic message having a geographical display condition. The present invention also relates to a method and a device for forwarding such a message. Finally, the present invention also relates to a method and a device for displaying such a message.

### Description of Related Art

Electronic messages like SMS (Short Message Service), EMS (Enhanced Message Service), and MMS (Multimedia Message Service) may be sent from one electronic communication device to another. The device transmitting the message may be portable, such as a mobile telephone. Alternatively, the transmitting device is stationary, such as a computer having access to the same communication network as the device receiving the message. Similarly, the receiving device may be stationary or portable. The message may be announced in the receiving device by a notification that a message is received or may be downloaded from a remote service node of the communication network.

A problem with both received electronic messages and notification messages is that the message or the notification message may not be relevant at once when the message is received. To be able to determine whether the message is relevant, the user has to read the electronic message, e.g. by downloading the message from a server. For example, Peter realizes that he and his wife Sara have run out of a specific type of ice cream only available in grocery store G. Thus, Peter sends an SMS message to Sara asking her to buy the specific type of ice cream only if she passes grocery store G on her way home. Sara receives the message without any delay when she is driving the car. However, Sara will not pass grocery store G on her way home. To do so, she would have to take a detour. Thus, the message is not relevant for Sara, as Peter only asks her to buy the specific type of ice cream if she passes grocery store G. Furthermore, Sara had to read the message while driving, which could be dangerous depending on the traffic situation. Consequently, it would have been better, if Sara would not have received the SMS message at all.

WO 03/056487 discloses a personal device for generating a reminder to a user comprising a memory for storing a memory note. The device comprises detection means for detecting that an external unit is present in the vicinity of the personal device. An address to the external device is stored together with the memory note. The memory note is an internal note, which has been entered be the user of the personal device. The personal device does not take care of the problem of sending messages between different terminals, which may cause problems as presented above, and which in some situation may be undesirable.

EP-A-1 148754 discloses a method for sending position data between a first and a second terminal by using SMS messages. In response to receiving a first message in a first terminal a second message is transmitted to a second terminal. The second message comprises location data, which may be used by the second terminal to determine the physical distance between the terminals. However, the messages are unconditionally displayed, which as described above could be undesirable in certain situations depending on the content of the message and the location of the receiver of the message.

WO 01/28171, discloses conditional message delivery to a terminal from a server. One condition for the delivery may be the location of the terminal. The location of the terminal is determined by a MLC/VLR/HLR, which is external to the terminal. The determination is made in the network, the display condition is not intended for the recipient of the message.

### Summary of the Invention

It is an object of the invention to provide a method, a communication device and a computer program product for preventing unnecessary displaying of an electronic message or an electronic notification message announcing an electronic message.

According to a first aspect of the invention, it comprises a method for conditional displaying of an electronic message comprising at least one display condition for the message in a portable electronic device. The method comprises the steps of, receiving the message from an external device, determining the geographical position of the portable electronic device, determining whether the geographical position fulfills a geographical display condition of the message, and displaying the message in the portable electronic device if the at least one display condition is fulfilled.

The step of determining whether the geographical position fulfills the geographical display condition may comprise determining whether the portable electronic device is located within a geographical area specified by the geographical display condition.

The step of determining whether the geographical position fulfills the display condition may comprise determining whether the portable electronic device is located within a certain distance specified by the geographical display condition from the location of another electronic device, which has transmitted the message.

The method may also comprise determining whether a time limit of a time display condition for indicating a final display time of the message has lapsed, wherein the step of displaying is executed if said time limit has not lapsed when the geographical display condition is fulfilled.

According to a second aspect of the invention, it comprises a method for transmitting an electronic message in an electronic device. The message is entered together with at least one display condition comprising a geographical display condition for conditional displaying of the message. The display condition is appended to the message. Also, an address of the recipient to which the message should be sent is entered. The method further comprises transmitting the electronic message including the geographical display condition to the recipient.

The step of entering the display condition may comprise the step of entering a geographical area in which an portable electronic device to which the message should be forwarded should be located when the message is displayed. Alternatively or additionally, the step of entering the display condition may comprise the step of entering a certain distance with regard to a specific geographical area, within which a portable electronic device to which the message should be forwarded should be located when the message is displayed.

The entering the display condition comprises the step of entering a geographical area in which the electronic device should be located when the message is displayed in another electronic device.

According to a third aspect of the invention, it comprises a portable electronic device for displaying an electronic message having at least one display condition including a geographical display condition for conditional displaying of the message. The device comprises display means for displaying the electronic message, receiving means for receiving the message from an -external device, position determination means for determining the geographical position of the portable electronic device, and determining means for determining whether the geographical position fulfills a geographical display condition of the message.

The device may also comprise a message interface adapted to display the electronic message if the geographical position fulfills the geographical display condition.

The determining means may also be adapted to, in operation, determine whether the portable electronic device is within a geographical area specified in the geographical display condition or within a certain distance therefrom. Furthermore, the determining means may be adapted to determine, in operation, whether the portable electronic device is located within a certain distance from another electronic device, from which the electronic message has been transmitted.

The electronic message may be an SMS, an EMS, or an MMS message, or a notification message thereof.

According to a fourth aspect of the invention, it comprises an electronic communication device for transmitting an electronic message therein. The communication device comprises input means for entering the electronic message and at least one display condition for conditional displaying of the message to be appended to said message, a message interface for forming the electronic message. The message interface is adapted to append to the electronic message a geographical display condition. Furthermore, the electronic device comprises transmitting means for transmitting the electronic message including the geographical display condition to an external device.

The message interface may be adapted to incorporate into the geographical display condition information with regard to a geographical area, in which the external device should be located when the electronic message is displayed therein.

The message interface may be adapted to incorporate into the geographical display condition information with regard to a certain distance from the electronic communication device within which the external device should be located when the electronic message is displayed.

The may be a mobile radio terminal, a pager, a personal digital assistant, a communicator, a smartphone an electronic organizer, or a mobile telephone.

According to a fifth aspect of the invention, it comprises a software program product embodied on a computer readable medium, comprising computer readable instructions for carrying out any one of the methods according to the invention when carried out by a processor.

Further embodiments of the invention are defined in the dependent claims.

It is an advantage of the invention that electronic messages will not be displayed until they are relevant for the receiver. Furthermore, messages that will never be relevant for the receiver will never be delivered at all, reducing traffic in the network, wherein network capacity is made available. Not displaying irrelevant messages has the further advantage of reducing the power consumption compared to displaying the message unconditionally. Also, conditional displaying has the advantage that the receiver will not be put at any risk by receiving the message in situations where reading the message could be dangerous, such as in traffic situations as described above. There are other situations where it might be better to not receive the message, such as when anything from the environment of the user that he has no influence could be a potential risk.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features, and advantages of the invention will appear from the following description of several embodiments of the invention, wherein various aspects of the invention will be described in more detail with reference to the accompanying drawings, in which:
Fig. 1 is a schematic view of a portable communication apparatus connected to a communication network and a position determination system;
Fig. 2 is a block diagram of certain components of the mobile terminal of Fig. 1;
Fig. 3 is a block diagram of certain components of a network node of the communication network for relaying messages according to the invention;
Figs. 4a-4c are block diagrams of communication devices illustrating geographical display conditions according to the invention;
Fig. 5 is a flow-chart of a method for forming messages according to the invention;
Fig. 6 is a flow-chart of a method for relaying messages according to the invention; and
Fig. 7 is a flow-chart of method for displaying messages according to the invention.

### Detailed Description of Embodiments

The present invention provides methods and devices for conditional displaying of an electronic message or electronic notification message announcing an electronic message when one or several display conditions associated with the message are fulfilled. The present invention provides the possibility to delay displaying the message until the electronic device, and thus the user, is located at a certain geographical position. With regard to an electronic message received in one electronic device from another, the receiving device has to be located at or within a certain distance from a specific geographical position when the message or a notification thereof is displayed.

An electronic message within the meaning of the present invention may be a message received from another communication device, and is thus an external message. The electronic message may be displayed directly at the device receiving the message. Alternatively, the electronic message according to the invention is an electronic notification or alert message notifying the user that an electronic message has been received at the device itself or is available at a service node of the communication network relaying the message. The message may be temporarily stored at the service node until it is downloaded to the addressed device. The electronic message may e.g. be an SMS (Short Message Service), an EMS (Enhanced Message Service), or an MMS (Multimedia Message Service) message.

The electronic message or the notification thereof according to the invention may be displayed visually on a display or by signal lamps or other equipment for visual signalizing to the user. The message may also be displayed audibly in by means of a loudspeaker. The message may be rendered by transmitting a prerecorded or synthesized message, which may form part of the received message. The message may also be displayed sensibly by a vibrator signal.

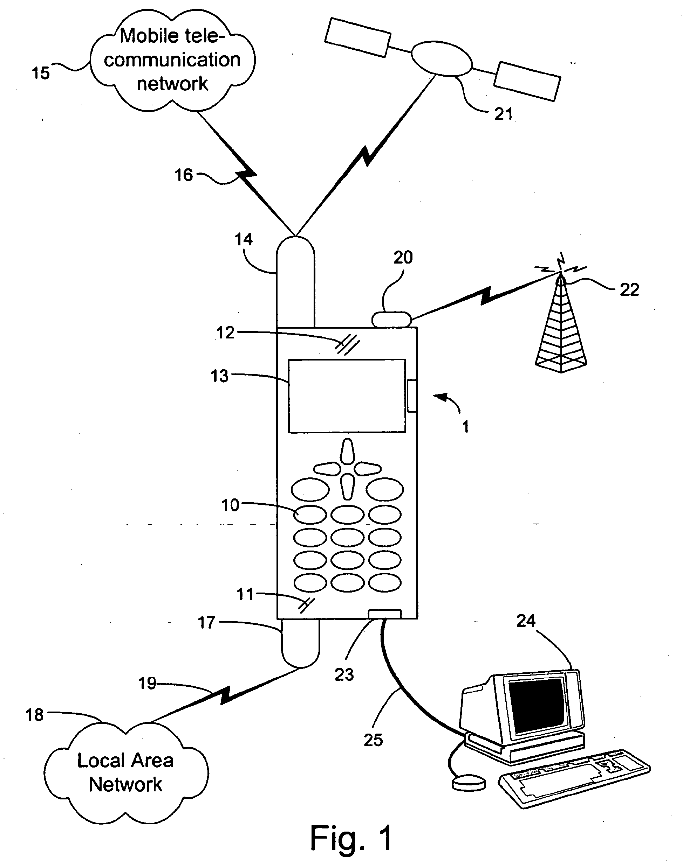

Fig. 1 illustrates a portable electronic device embodied as a mobile terminal 1 or mobile telephone. The invention is not limited to a mobile terminal 1, but can be incorporated into any portable electronic device having the possibility to display a message or a notification message. The mobile terminal 1 may be arranged to receive and/or transmit electronic messages, and comprises means for determining or announcing its geographical position. A portable electronic device according to the invention comprises, but is not limited to, a mobile radio terminal, a mobile telephone, a pager, a personal digital assistant (PDA), and a communicator, i.e. a smartphone or an electronic organizer. For convenience, reference to a mobile terminal 1 will be made throughout this description. Furthermore, electronic communication devices capable to send electronic messages according to the invention may also be stationary, such as a desktop or laptop computer.

The portable communication device according to the invention is not limited to a portable communication device per se, but can be incorporated into semi-portable or semi-stationary devices. Such semi-stationary devices comprises electronic equipment mounted into a moveably device, e.g. electronic equipment mounted into a vehicle.

The mobile terminal 1 comprises a man-machine or user interface (UI) comprising, but not limited to, a keypad 10, a microphone 11, a loudspeaker 12 and a display 13. The user interface may be used for operating and interacting with the mobile terminal, such as fetching an announced electronic message, and reading/writing an electronic message.

The mobile terminal 1 may optionally comprise various communication means for communicating with other electronic equipment. A first antenna 14 is adapted for communication with e.g. a mobile telecommunication network 15 over a first wireless link 16. The telecommunication network 15 may e.g. be a GSM (General System for Mobile communication), a UMTS (Universal Mobile Telecommunications System), a PDC (Personal Digital Cellular system), a IS-136, a IS-95, a IMT-2000 (International Mobile Telecommunications 2000) or any other communication network utilizing any of the frequency division, time division or code division techniques.

A second antenna 17 is adapted for short-range supplementary communication with a local area network 18 or a peripheral electronic device over a second wireless link 19. The second wireless link 10 may e.g. be a Bluetooth^{®} link.

A third antenna or reception means 20 is adapted to receive position and time data from several satellites 21 (only one is shown) or pseudolites 22 (only one is shown). With pseudolite is meant a position data transmitting means, which is located on the ground and which transmits data similar to position and time data transmitted from a satellite 21. The mobile terminal 1 is adapted to determine the geographical position of the mobile terminal 1 on the surface of the earth. To determine the position, data from several satellites 21 or pseudolites 22 have to be received. The position and time data received from several pseudolites 22 may be used similar to position and time data received from the satellites 21 to determine the geographical position of the mobile terminal 1. The pseudolites 22 may e.g. form a local network for position determination in places wherein signals from the satellites 21 may not reach the mobile terminal 1.

An accessory connector 23 is provided for connecting the mobile terminal 1 to various peripheral devices. A computer 24 having input means, such as a keyboard and a mouse, may be connected to the accessory connector 23 by means of a cable 25, such as a serial cable. Alternatively, the computer 24 is connected to the mobile terminal 1 by means of a wireless link, such as the second link 19. The mobile terminal 1 may be connected to a global information network, such as the Internet, e.g. through the computer 24 or the mobile telecommunication network 15. It is possible to write messages according to the invention by means of the computer, which message may be transmitted to the communication network 15 trough the mobile terminal 1. Alternatively, the message is transmitted through a connection to the global information network.

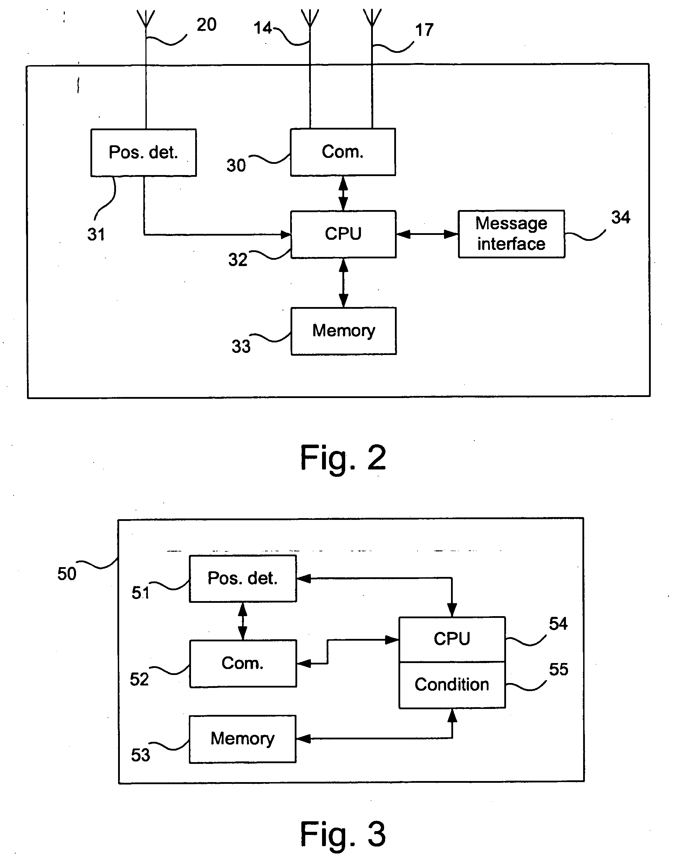

Fig. 2 illustrates components of the mobile terminal 1 according to the invention. The first and second antennas 14, 17 are connected to a communication unit 30. The communication unit 30 provides wireless communication capabilities for communicating with the mobile telecommunication network 15 and the local area network 18 according to any of the above mentioned technologies. To provide the communication capabilities, the communication unit 30 comprises e.g. a receiver/transmitter, a modulator/demodulator, a coder/decoder, analog-to-digital (A/D) converters, amplifiers, and a digital signal processor.

A position determination unit 31 is connected to the third antenna 20. The position determination unit 31 is adapted to determine the geographical position of the mobile terminal 1 on the earth based on received position data. One such system for determining the geographical position comprises a GPS (Global Positioning System) receiver, which may receive positioning and timing data from the satellites 21 orbiting the earth or from the pseudolites 22 positioned on the surface of the earth. Based on the received position and timing data, the position determination unit 31 will generate a very exact geographical position of the mobile terminal 1.

Alternatively, the position determination unit 31 uses another position determination system, such as a network based positioning system, which may be collocated or consolidated with the base stations of the mobile telecommunication network. The network based positioning system determines the geographical position of the mobile terminal 1 e.g. based on received signal measurements. The measurements may comprise angle of arrival, time difference and signal strength of received signals. Once the geographical position of the mobile terminal 1 is determined, it may be reported back to the terminal 1.

It is also possible to determine the position of the mobile terminal 1 in a GSM telecommunication system. The mobile terminal 1 receives timing data from three different base transceiver stations. Based on the arrival time of the data received from the base transceiver stations, the geographical position of the mobile terminal 1 may be determined. One such system is the E-OTD (Enhanced Observed Time Difference).

A hybrid approach is that the mobile terminal 1 collects measurement data from its environment that are reported back to the network, which in turn uses the data to determine the geographical position of the mobile terminal 1, which may be reported back.

The position determination unit 31 is connected to a controller or central processing unit (CPU) 32, which may be used to implement one or several units of the mobile terminal 1 by software readable instructions.

The controller 32 is connected to a memory 33, which may comprise one or several storing means for temporarily and permanent storage of data and software instructions, such as a random access memory and a read only memory, in which geographical data and message data may be stored. The controller 32 is adapted to repeatedly obtain the specific geographical position or area, possibly by interrogating the position determination unit 31, in which the mobile terminal 1 currently is located. The determination is made with a predetermined time interval, such as every 10^{th} second or every 5^{th} minute. The time interval may be default or user defined as desired. Alternatively, the time interval is adaptively set depending on the speed of the mobile terminal 1, which may be determined by the position determination unit 31. The controller 32 may form part of the position determination unit 31. Alternatively, the position determination unit 31 comprises a separate processor for determining the geographical area in which the mobile terminal 1 is currently located.

A message interface or unit 34 comprises means for forming a message and append one or several associated display condition thereto. Also, the message interface 34 appends a receiver address, such as a telephone number, to the message when it should be transmitted to a remote communication device. The message interface 34 may form part of the user interface and be accessible by means of user selectable menus presented in the display 13. In a first window the user may enter the message, whereas the display condition(s) may be entered in a second window appearing when the message is completed. Thus, the message comprises a message or data payload field, an address field, and a display condition field.

Fig. 3 illustrates a service node 50 according to the present invention, which may form part of the communication network 15. The service node 50 may comprise of one or several sub-nodes, which are not located at the same position within the communication network 15. In a GSM system, the service node may e.g. form part of the visitor location register (VLR) which currently administrates the mobile telephone. Alternatively, the service node 50 forms a part of the home location register (HLR) in a GSM system.

The position of the mobile terminal 1 may be determined at the service node 50. The mobile terminal 1 may report terminal data uniquely identifying the terminal within the communication network. Depending of which one or several base stations that receives the terminal data, the position of the mobile terminal 1 may be determined by a position determination unit 51. The service node also comprises a communication unit 52 comprising a receiver for receiving an electronic message from a first electronic communication device and a transmitter for forwarding said message. The message or a notification thereof is forwarded when a second electronic communication device to which the message is addressed fulfills at least a geographical display condition specified in the message, as will be explained below. A memory 53, such as the memory 33 of the mobile terminal 1 is provided for temporarily storing the message and geographical position data. A central processing unit 54 may administrate the relaying of the message. Therefore, the processing unit 54 may comprise a condition unit 55, which may determine whether the conditions associated with the message are fulfilled. If so the controller 54 may transmit the message or the notification thereof to the addressed communication device. The condition unit may also be provided as a stand-alone unit.

The message may be announced and downloaded even if all display conditions are not fulfilled. Thus, the receiving device will determine when to display the message.

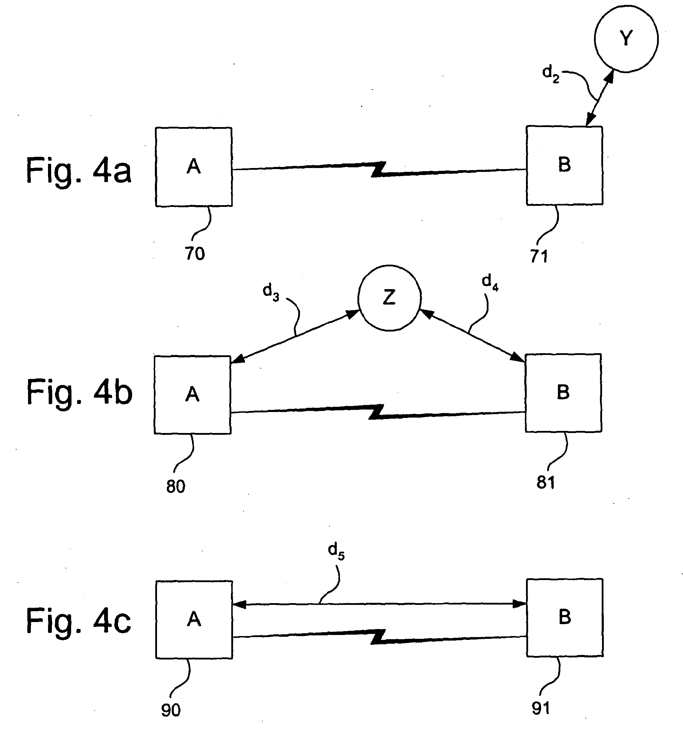

A proximity function may indicate whether the mobile terminal 1 is in the proximity of another mobile terminal if the network operator has knowledge of where mobile terminals are currently located. If the message comprises a display condition corresponding to the case illustrated in Fig. 4c and described below, the service node 50 will only forward the message when position data relating to both a first and a second communication device 90, 91 (Fig. 4d) is within a specified distance.

Figs. 4a-4c illustrate exemplary geographical display conditions that have to be fulfilled in order to display the electronic message or a notification thereof at the mobile terminal 1. In Fig. 4a, an electronic communication device 70 not having a position determination capability transmits an electronic message comprising a geographical display condition to a portable communication device 71. The portable communication device comprises a position determination unit for determining its geographical position. When the portable communication device 71 is within or within a certain distance d₁ of a geographical area or position Y specified in the message, the message or a notification thereof will be displayed at the portable communication device 71. However, if the portable communication device 71 is not within or within the certain distance d₁ of the geographical area Y, the message or the notification thereof will be stored in the portable communication device 71 until the geographical display condition is fulfilled.

In Fig. 4b, a first portable communication device 80 transmits an electronic message to a second portable communication device 81. The message has a geographical display condition specifying that both the first and the second portable communication devices 80, 81, have to be within or within a certain distance d₂, d₃ of a geographical area or location Z. The distance d₂ and d₃ may be equal or different. The message is forwarded through the service node as will be explained below. The first and the second portable communication devices 90, 91 report their respective positions to the service node 50. Alternatively, the service node determines their respective positions from data reported back to the communication network. Once the geographical display condition is fulfilled, the message or a notification thereof is forwarded from the service node 50 to the second portable communication device 81.

Fig. 4c describes a situation similar to Fig. 4b. In this situation the geographical display condition specifies that a first and a second portable-communication device 90, 91 have to be in proximity to each other, i.e. within a certain distance d₄ of each other. When the condition is fulfilled, the service node 50 will forward the message or a notification thereof to the second portable communication device 91.

It is also possible that the geographical display condition comprises information requiring that the transmitting device should be located within a certain geographical area or within a certain distance thereof when the message is displayed in the receiving device.

The geographical display condition may be combined with one or several other display conditions. A time display condition may specify that the message should be displayed within a certain due date or time limit. If the electronic device in which the message is to be displayed is not within or within a certain distance d₁, d₂, d₃, d₄ of the geographical area Y, Z or another device within the time limit, the message will never be displayed.

The geographical areas may e.g. be defined by the geographical co-ordinates of the outer boundaries thereof. The coordinates may e.g. be provided with a certain mutual distance, wherein each area comprises an array of discrete co-ordinate values stored in e.g. the memory 33. Once the geographical position of the mobile terminal is determined, the controller 32, or an internal processing unit of the position determination unit 31, may determine whether the current geographical position of the mobile terminal 1 is within the boundaries of any of the specified areas. If not, the mobile terminal 1 is determined being within an unspecified area.

A service provider may provide area co-ordinate data. The co-ordinate data may be downloaded from a communication network, such as the mobile telecommunication network 15. The user may e.g. download area co-ordinate data relating to e.g. all shopping malls within a specific. Alternatively, such co-ordinate data is automatically downloaded when the mobile terminal 1 enters a new city or area.

The geographical co-ordinates may also be input into the mobile terminal 1 by means of a reading device, such as a bar code reader. E.g. a grocery store advertising in a newspaper or magazine could provide a bar code comprising the position data of the geographical location. Such information may also be downloaded from a web site.

A software tool run on the computer 24 for creating the geographical areas may also be provided. The software tool may e.g. provide maps over different countries and cities all over the world. Certain geographical areas within the maps may be defined by drawing a boundary around an area, e.g. by means of the mouse. Once the boundary is provided, the software tool will automatically generate the geographical co-ordinates of the area specified by the boundary. When the area is generated it may be transferred to the mobile terminal 1. Any geographical position falling outside a specified area may be specified as belonging to the unspecified area.

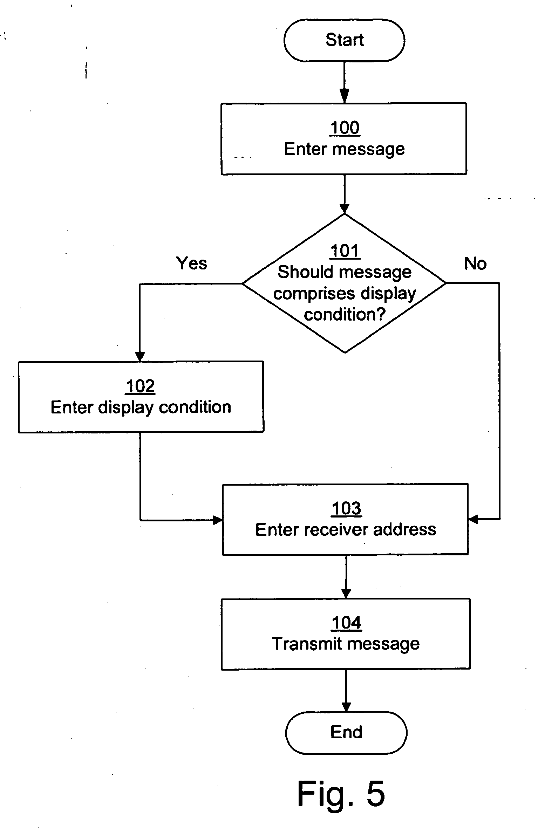

In Fig. 5, a flowchart of a method for forming and transmitting an electronic message according to the invention is illustrated. In a first step 100, the message is entered or written by means of the keypad 10. In step 101 it is determined whether the message should comprise any display condition. If the answer in step 102 is no, the procedure continues to step 103. If the answer in step 102 is yes, the procedure proceeds to step 102, wherein any display condition, such as a geographical and any additional display condition, is entered by the user and appended to message. Entering the display condition may comprise selecting from a list of predetermined geographical areas or locations associated with geographical co-ordinates, which will be attached to the message. Each entry of the list of predetermined geographical areas may have a name to be easy recognizable, such as Grocery A, Shopping Mall B, Restaurant C, etc., or be presented with a picture or photo. Entering the display condition may also comprise entering a certain distance to a geographical area or another device, within which the portable communication apparatus, to which the message is addressed, should be located when the message is displayed. In step 103 the address or telephone number of the portable communication apparatus to which message should be sent is entered before the message is transmitted in step 105.

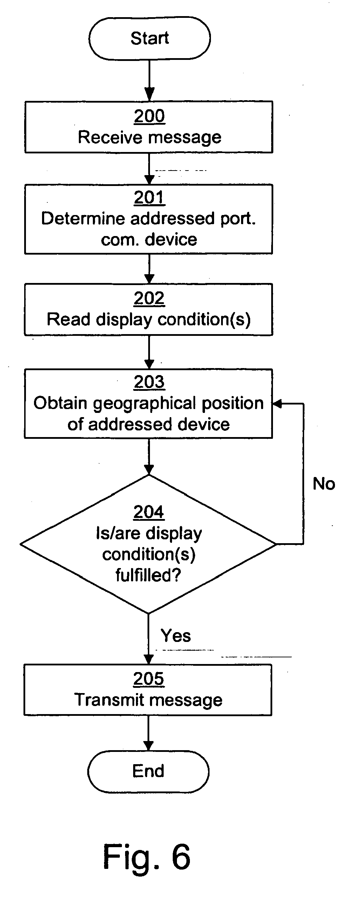

In Fig. 6, a method for forwarding an electronic message from an electronic communication device, which may be portable or stationary, to a portable communication device is illustrated. The message is relayed though the service node 50 of the communication network 15, wherein the method is carried out e.g. by the processor 54. In a first step 200, the message comprising one or several display conditions is received by the service node 50 from the transmitting electronic device. In step 201, the addressed portable communication device, i.e. identification data attached to the message of the portable communication device to which the message should be forwarded is read. In step 202, the display condition(s) of the message is/are read. In step 203, the geographical position of the addressed portable communication device is obtained, e.g. according to above. Then in step 204 it is determined whether the display condition(s) is/are fulfilled, e.g. whether the geographical position fulfils the geographical display condition and whether a time limit is passed. If the answer in step 204 is no, the procedure returns to step 203. If the answer in step 204 is yes, the procedure proceeds to step 205, wherein the message or a notification thereof is transmitted to the addressed portable communication device, wherein the procedure is ended. Alternatively, if the notification is transmitted, the procedure comprises waiting to transmit the message until a request for the downloading the message is received, wherein the message is transmitted. If it is determined in step 204 that a time limit for forwarding the message has lapsed, the service node 50 may discard the message. Discarding the message may also comprise transmitting a message undelivered notification to the electronic device sending the message.

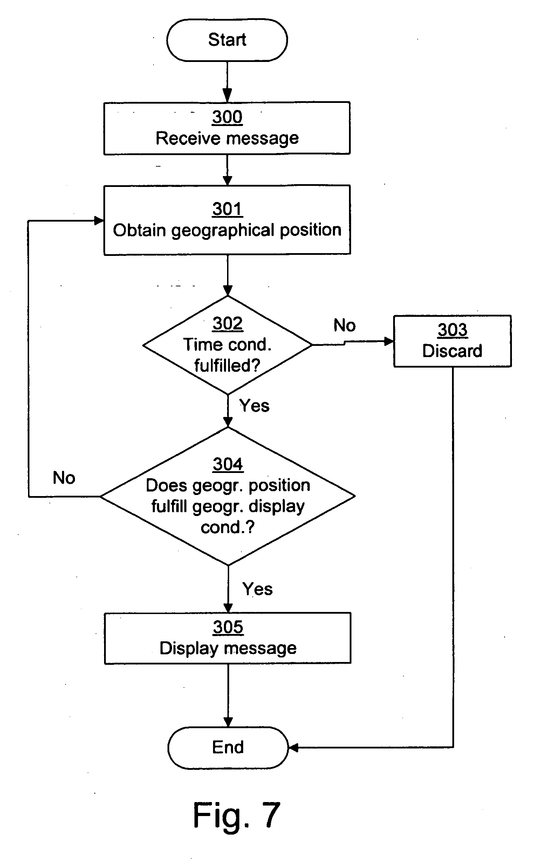

In Fig. 7, a method for displaying an electronic message in an electronic device is illustrated. The electronic message is received from another electronic device. In a first step 300 the message is received from an external device and temporarily stored until the display condition(s) is fulfilled. In a second step 301 the geographical position of the electronic device is obtained. In step 302, it is determined whether the time display condition of the message is fulfilled. If the answer is no, the message is discarded in step 303. If the answer in step 302 is yes, the procedure proceeds to step 304, wherein it is determined whether the geographical position of the electronic device fulfills the geographical display condition. If the answer in step 304 is no, the procedure returns to step 301. If the answer in step 304 is yes, the message or the notification thereof is displayed in step 305, wherein the procedure is ended.

If the displayed message is a notification that a message is stored at the service node 50 the user may issue a request to download the stored message in response to the displaying the notification.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The invention is only limited by the appended patent claims.

## Claims

1. A method for conditional displaying of an electronic message comprising at least one display condition including a geographical display condition for the message in a portable electronic device (1), **characterized by** the steps of:
receiving in the portable electronic device (1) the message from an external device;
determining in the portable electronic device (1) the geographical position of the portable electronic device;
determining in the portable electronic device (1) whether the geographical position fulfills the geographical display condition of the message; and
displaying the message in the portable electronic device (1) if the at least one display condition is fulfilled.

2. The method according to claim 1, wherein the step of determining whether the geographical position fulfills the geographical display condition comprises determining whether the portable electronic device (1) is located within a geographical area specified by the geographical display condition.

3. The method according to claim 1 or 2, wherein the step of determining whether the geographical position fulfills the display condition comprises determining whether the portable electronic device (1) is located within a certain distance specified by the geographical display condition from the location of another electronic device, which has transmitted the message.

4. The method according to any of the claims 1 to 3, further comprising the step of determining whether a time limit of a time display condition for indicating a final display time of the message has lapsed, wherein the step of displaying is executed if said time limit has not lapsed when the geographical display condition is fulfilled.

5. A method for transmitting an electronic message in an electronic device (1), comprising the step of entering said message, **characterized by** the steps of
entering a at least one display condition, which is intended for a recipient of the message, comprising a geographical display condition for conditional displaying of the message;
appending said display condition to said message;
entering a address of the recipient to which the message should be sent; and
transmitting the electronic message including the geographical display condition to the recipient.

6. The method according to claim 5, wherein the step of entering the display condition comprises the step of entering a geographical area in which the electronic device should be located when the message is displayed in another electronic device (91), which is the recipient.

7. The method according to claim 5, wherein the step of entering the display condition comprises the step of entering a geographical area in which a portable electronic device (91), to which the message should be forwarded and which is the recipient, should be located when the message is displayed.

8. The method according to claim 5, wherein the step of entering the display condition comprises the step of entering a certain distance with regard to a specific geographical area, within which a portable electronic device (91), to which the message should be forwarded and which is the recipient, should be located when the message is displayed.

9. A portable electronic device (1) for displaying an electronic message having at least one display condition including a geographical display condition for conditional displaying of the message, comprising display means (10, 13, 35) for displaying the electronic message,
**characterized by**
receiving means (14, 17, 30) for receiving the message from an external device;
position determination means (31) for determining the geographical position of the portable electronic device (1); and
determining means (32) for determining whether the geographical position fulfills the geographical display condition of the message.

10. The device according to claim 9, further comprising a message interface (34) adapted to display the electronic message if the geographical position fulfills the geographical display condition.

11. The device according to claim 9 or 10, wherein the determining means (32) is adapted to, in operation, determine whether the portable electronic device is within a geographical area specified in the geographical display condition or within a certain distance therefrom.

12. The device according to any of the claims 9 to 11, wherein the determining means (32) is adapted to determine, in operation, whether the portable electronic device (91) is located within a certain distance from another electronic device (90), from which the electronic message has been transmitted.

13. The device according to any of the claims 9 to 12, wherein the electronic message is a notification message.

14. The device according to any of the claims 9 to 12, wherein the message is an SMS, an EMS, or an MMS message.

15. An electronic communication device (1) for transmitting an electronic message therein, comprising input means (10) for entering the electronic message and at least one display condition for conditional displaying of the message to be appended to said message, and a message interface (34) for forming the electronic message,
**characterized in that**
the message interface is adapted to append to the electronic message a geographical display condition, which is intended for a recipient of the message; and
the electronic device (1) comprises transmitting means (14, 17, 30) for transmitting the electronic message including the geographical display condition to an external device, which is the recipient of the message.

16. The device according to claim 15, wherein the message interface (34) is adapted to incorporate into the geographical display condition information with regard to a geographical area, in which the external device should be located when the electronic message is displayed.

17. The device according to claim 15, and wherein the message interface (34) is adapted to incorporate into the geographical display condition information with regard to a certain distance from the electronic communication device (1, 90) within which the external device should be located when the electronic message is displayed.

18. The device according to any of the claims 15 to 17, wherein the device is a mobile radio terminal, a pager, a personal digital assistant, a communicator, a smartphone or an electronic organizer.

19. The device according to any of the claims 15 to 17, wherein the device is a mobile telephone (1).

20. A software program product embodied on a computer readable medium, comprising computer readable instructions for carrying out the method according to any of the claims 1-4 when carried out by a processor (32).

21. A software program product embodied on a computer readable medium, comprising computer readable instructions for carrying out the method according to any of the claims 5-8 when carried out by a processor (54).

## Patentansprüche

1. Verfahren zur bedingten Anzeige einer elektronischen Nachricht, die wenigstens eine Anzeigebedingung mit einer geografischen Anzeigebedingung für die Nachricht aufweist, bei einem tragbaren elektronischen Gerät (1),
**gekennzeichnet durch** die Schritte:
Empfangen der Nachricht beim tragbaren elektronischen Gerät (1) von einem externen Gerät,
Bestimmen der geografischen Position des tragbaren elektronischen Geräts beim tragbaren elektronischen Gerät (1),
Bestimmen beim tragbaren elektronischen Gerät (1), ob die geografische Position die geografische Anzeigebedingung der Nachricht erfüllt, und
Anzeigen der Nachricht beim tragbaren elektronischen Gerät (1), wenn die wenigstens eine Anzeigebedingung erfüllt ist.

2. Verfahren nach Anspruch 1, wobei der Schritt zur Bestimmung, ob die geografische Position die geografische Anzeigebedingung erfüllt, die Bestimmung aufweist, ob das tragbare elektronische Gerät (1) in einem durch die geografische Anzeigebedingung spezifizierten geografischen Bereich lokalisiert ist.

3. Verfahren nach Anspruch 1 oder 2, wobei der Schritt zur Bestimmung, ob die geografische Position die Anzeigebedingung erfüllt, die Bestimmung aufweist, ob das tragbare elektronische Gerät (1) in einem gewissen, durch die geografische Anzeigebedingung spezifizierten Abstand von der Stelle eines anderen elektronischen Geräts, das die Nachricht übertragen hat, lokalisiert ist.

4. Verfahren nach einem der Ansprüche 1 bis 3, außerdem mit dem Schritt zur Bestimmung, ob eine Zeitgrenze einer Zeitanzeigebedingung zur Anzeige einer finalen Anzeigezeit der Nachricht überschritten ist, wobei der Schritt zur Anzeige ausgeführt wird, wenn die Zeitgrenze nicht überschritten ist, wenn die geografische Anzeigebedingung erfüllt ist.

5. Verfahren zur Übertragung einer elektronischen Nachricht bei einem elektronischen Gerät (1), aufweisend den Schritt zur Eingabe der Nachricht, **gekennzeichnet durch** die Schritte:
Eingeben wenigstens einer für einen Empfänger der Nachricht intendierten Anzeigebedingung, die eine geografische Anzeigebedingung für eine bedingte Anzeige der Nachricht aufweist,
Anbringen der Anzeigebedingung an der Nachricht,
Eingeben einer Adresse des Empfängers, zu dem die Nachricht gesendet werden soll, und
Übertragen der die geografische Anzeigebedingung aufweisenden elektronischen Nachricht zum Empfänger.

6. Verfahren nach Anspruch 5, wobei der Schritt zur Eingabe der Anzeigebedingung den Schritt zur Eingabe eines geografischen Bereichs aufweist, in welchem das elektronische Gerät lokalisiert sein soll, wenn die Nachricht bei einem anderen elektronischen Gerät (91), das der Empfänger ist, angezeigt wird.

7. Verfahren nach Anspruch 5, wobei der Schritt zur Eingabe der Anzeigebedingung den Schritt zur Eingabe eines geografischen Bereichs aufweist, in welchem ein tragbares elektronisches Gerät (91), zu dem die Nachricht übermittelt werden soll und das der Empfänger ist, lokalisiert sein soll, wenn die Nachricht angezeigt wird.

8. Verfahren nach Anspruch 5, wobei der Schritt zur Eingabe der Anzeigebedingung den Schritt zur Eingabe eines gewissen, auf einen spezifischen geografischen Bereich bezogenen Abstands, in welchem ein tragbares elektronisches Gerät (91), zu dem die Nachricht übermittelt werden soll und das der Empfänger ist, lokalisiert sein soll, wenn die Nachricht angezeigt wird.

9. Tragbares elektronisches Gerät (1) zur Anzeige einer elektronischen Nachricht, die wenigstens eine Anzeigebedingung mit einer geografischen Anzeigebedingung für eine bedingte Anzeige der Nachricht aufweist, mit einer Anzeigeeinrichtung (10, 13, 35) zur Anzeige der elektronischen Nachricht, **gekennzeichnet durch**
eine Empfangseinrichtung (14, 17, 30) zum Empfang der Nachricht von einem externen Gerät,
eine Positionsbestimmungseinrichtung (31) zur Bestimmung der geografischen Position des tragbaren elektronischen Geräts (1), und
eine Bestimmungseinrichtung (32) zur Bestimmung, ob die geografische Position die grafische Anzeigebedingung der Nachricht erfüllt.

10. Gerät nach Anspruch 9, außerdem mit einer Nachrichtenschnittstelle (34), die ausgebildet ist zur Anzeige der elektronischen Nachricht, wenn die geografische Position die geografische Anzeigebedingung erfüllt.

11. Gerät nach Anspruch 9 oder 10, wobei die Bestimmungseinrichtung (32) ausgebildet ist zum Bestimmen im Betrieb, ob das tragbare elektronische Gerät in dem in der geografischen Anzeigebedingung spezifizierten geografischen Bereich ist oder in einem gewissen Abstand von diesem ist.

12. Gerät nach einem der Ansprüche 9 bis 11, wobei die Bestimmungseinrichtung (32) ausgebildet ist zum Bestimmen im Betrieb, ob das tragbare elektronische Gerät (91) in einem gewissen Abstand von einem anderen elektronischen Gerät (90), von dem die elektronische Nachricht übertragen worden ist, lokalisiert ist.

13. Gerät nach einem der Ansprüche 9 bis 12, wobei die elektronische Nachricht eine Notifikationsnachricht ist.

14. Gerät nach einem der Ansprüche 9 bis 12, wobei die Nachricht eine SMS-, eine EMS- oder eine MMS-Nachricht ist.

15. Elektronisches Kommunikationsgerät (1) zur Übertragung einer elektronischen Nachricht bei ihm, das eine Eingabeeinrichtung (10) zur Eingabe der elektronischen Nachricht und wenigstens einer an der Nachricht anzubringenden Anzeigebedingung zur bedingten Anzeige der Nachricht und eine Nachrichtenschnittstelle (34) zur Bildung der elektronischen Nachricht aufweist, **dadurch gekennzeichnet, dass**
die Nachrichtenschnittstelle ausgebildet ist zum Anbringen einer für einen Empfänger der Nachricht intendierten geografischen Anzeigebedingung an der elektronischen Nachricht, und
das elektronische Gerät (1) eine Übertragungseinrichtung (14, 17, 30) zur Übertragung der die geografische Anzeigebedingung aufweisenden elektronischen Nachricht zu einem externen Gerät, das der Empfänger der Nachricht ist, aufweist.

16. Gerät nach Anspruch 15, wobei die Nachrichtenschnittstelle (34) ausgebildet ist zum Unterbringen von Information in Bezug auf einen geografischen Bereich, in welchem das externe Gerät lokalisiert sein soll, wenn die elektronische Nachricht angezeigt wird, in der geografischen Anzeigebedingung.

17. Gerät nach Anspruch 15 und wobei die Nachrichtenschnittstelle (34) ausgebildet ist zum Unterbringen von Information in Bezug auf einen gewissen Abstand vom elektronischen Kommunikationsgerät (1, 90), in welchem Abstand das externe Gerät lokalisiert sein soll, wenn die elektronische Nachricht angezeigt wird, in der geografischen Anzeigebedingung.

18. Gerät nach einem der Ansprüche 15 bis 17, wobei das Gerät ein mobiles Funkendgerät (mobile radio terminal), ein Funkrufempfänger (pager), ein persönlicher digitaler Assistent (personal digital assistant), ein Zeichengeber (communicator), ein intelligentes Telefon (smartphone) oder ein elektronischer Organisator (electronic organizer)ist.

19. Gerät nach einem der Ansprüche 15 bis 17, wobei das Gerät ein Mobiltelefon (1) ist.

20. Auf einem Computer-lesbaren Medium realisiertes Softwareprogrammprodukt, das, wenn von einem Prozessor (32) ausgeführt, Computer-lesbare Instruktionen zur Ausführung des Verfahrens nach einem der Ansprüche 1 bis 4 aufweist.

21. Auf einem Computer-lesbaren Medium realisiertes Softwareprogrammprodukt, das, wenn von einen Prozessor (54) ausgeführt, Computer-lesbare Instruktionen zur Ausführung des Verfahrens nach einem der Ansprüche 5 bis 8 aufweist.

## Revendications

1. Procédé d'affichage conditionnel d'un message électronique comprenant au moins une condition d'affichage incluant une condition géographique d'affichage du message dans un dispositif électronique portatif (1), **caractérisé par** les étapes consistant à :
recevoir le message, en provenance d'un dispositif extérieur, sur le dispositif électronique portatif (1) ;
déterminer sur le dispositif électronique portatif (1) la position géographique du dispositif électronique portatif ;
déterminer sur le dispositif électronique portatif (1) si la position géographique satisfait la condition géographique d'affichage du message ; et
afficher le message sur le dispositif électronique portatif (1) si ladite au moins une condition d'affichage est satisfaite.

2. Procédé selon la revendication 1, dans lequel l'étape consistant à déterminer si la position géographique satisfait la condition géographique d'affichage comprend le fait de déterminer si le dispositif électronique portatif (1) se situe à l'intérieur d'une région géographique spécifiée par la condition géographique d'affichage.

3. Procédé selon la revendication 1 ou 2, dans lequel l'étape consistant à déterminer si la position géographique satisfait la condition d'affichage comprend le fait de déterminer si le dispositif électronique portatif (1) se situe dans la limite d'une certaine distance, spécifiée par la condition géographique d'affichage, de la position d'un autre dispositif électronique, qui a émis le message.

4. Procédé selon l'une quelconque des revendications 1 à 3, comprenant en outre l'étape consistant à déterminer s'il s'est écoulé une limite de temps d'une condition temporelle d'affichage, destinée à indiquer une heure finale d'affichage du message, dans lequel l'étape d'affichage est exécutée si ladite limite de temps ne s'est pas écoulée lorsque la condition géographique d'affichage est satisfaite.

5. Procédé d'émission d'un message électronique sur un dispositif électronique (1), comprenant l'étape de saisie dudit message, **caractérisé par** les étapes consistant à :
saisir au moins une condition d'affichage, destinée au destinataire du message, comprenant une condition géographique d'affichage pour réaliser un affichage conditionnel du message ;
concaténer ladite condition d'affichage audit message ;
saisir une adresse du destinataire à qui doit être envoyé le message ; et
émettre vers le destinataire le message électronique contenant la condition géographique d'affichage.

6. Procédé selon la revendication 5, dans lequel l'étape de saisie de la condition d'affichage contient l'étape de saisie d'une région géographique dans laquelle devrait se trouver le dispositif électronique lorsque le message est affiché sur un autre dispositif électronique (91), qui est le destinataire.

7. Procédé selon la revendication 5, dans lequel l'étape de saisie de la condition d'affichage contient l'étape de saisie d'une région géographique dans laquelle devrait se trouver un dispositif électronique portatif (91), auquel le message devrait être expédié et qui est le destinataire, lorsque le message est affiché.

8. Procédé selon la revendication 5, dans lequel l'étape de saisie de la condition d'affichage contient l'étape de saisie d'une certaine distance par rapport à une région géographique spécifique, dans la limite de laquelle devrait se trouver un dispositif électronique portatif (91), auquel le message devrait être expédié et qui est le destinataire, lorsque le message est affiché.

9. Dispositif électronique portatif (1), destiné à afficher un message électronique comportant au moins une condition d'affichage comprenant une condition géographique d'affichage commandant l'affichage conditionnel du message, comprenant un moyen d'affichage (10, 13, 35), destiné à afficher le message électronique,
**caractérisé par**
un moyen de réception (14, 17, 30), destiné à recevoir le message en provenance d'un dispositif extérieur ;
un moyen de détermination de la position (31), destiné à déterminer la position géographique du dispositif électronique portatif (1) ; et
un moyen de détermination (32), destiné à déterminer si la position géographique satisfait la condition géographique d'affichage du message.

10. Dispositif selon la revendication 9, comprenant en outre une interface de message (34), adaptée pour afficher le message électronique si la position géographique satisfait la condition géographique d'affichage.

11. Dispositif selon la revendication 9 ou 10, dans lequel le moyen de détermination (32) est adapté pour déterminer, en service, si le dispositif électronique portatif se trouve dans une région géographique spécifiée dans la condition géographique d'affichage ou dans la limite d'une certaine distance de celle-ci.

12. Dispositif selon l'une quelconque des revendications 9 à 11, dans lequel le moyen de détermination (32) est adapté pour déterminer, en service, si le dispositif électronique portatif (91) est situé dans la limite d'une certaine distance d'un autre dispositif électronique (90), à partir duquel a été émis le message électronique.

13. Dispositif selon l'une quelconque des revendications 9 à 12, dans lequel le message électronique est un message de notification.

14. Dispositif selon l'une quelconque des revendications 9 à 12, dans lequel le message est un message SMS, EMS ou MMS.

15. Dispositif de communication électronique (1), destiné à émettre un message électronique, comprenant un moyen de saisie (10) destiné à saisir le message électronique et au moins une condition d'affichage, destinée à afficher conditionnellement le message, qui est concaténée audit message, et une interface de message (34) destinée à former le message électronique,
**caractérisé en ce que** :
l'interface de message est adaptée pour concaténer au message électronique une condition géographique d'affichage, qui est destinée au destinataire du message ; et
le dispositif électronique (1) comprend un moyen d'émission (14, 17, 30) destiné à émettre le message électronique incluant la condition géographique d'affichage vers un dispositif extérieur, qui est le destinataire du message.

16. Dispositif selon la revendication 15, dans lequel l'interface de message (34) est adaptée pour intégrer dans la condition géographique d'affichage des informations concernant une région géographique, dans laquelle devrait se trouver le dispositif extérieur lorsque le message électronique est affiché.

17. Dispositif selon la revendication 15, et dans lequel l'interface de message (34) est adaptée pour intégrer dans la condition géographique d'affichage des informations concernant une certaine distance du dispositif de communication électronique (1, 90) à l'intérieur de laquelle devrait se trouver le dispositif extérieur lorsque le message électronique est affiché.

18. Dispositif selon l'une quelconque des revendications 15 à 17, dans lequel le dispositif est un terminal radio mobile, un boîtier de recherche de personnes, un assistant numérique personnel, un communicateur, un téléphone intelligent ou un organiseur électronique.

19. Dispositif selon l'une quelconque des revendications 15 à 17, dans lequel le dispositif est un téléphone mobile (1).

20. Progiciel matérialisé sur un support lisible par ordinateur, comprenant des instructions lisibles par ordinateur afin de mettre en oeuvre le procédé selon l'une quelconque des revendications 1 à 4 lorsqu'elles sont exécutées par un processeur (32).

21. Progiciel matérialisé sur un support lisible par ordinateur, comprenant des instructions lisibles par ordinateur afin de mettre en oeuvre le procédé selon l'une quelconque des revendications 5 à 8 lorsqu'elles sont exécutées par un processeur (54).
